Europäisches Patentamt

European Patent Office

Office européen des brevets

(19)

(11) Veröffentlichungsnummer : **0 121 001**
**B1**

(12) EUROPÄISCHE PATENTSCHRIFT

(45) Veröffentlichungstag der Patentschrift :
17.08.88

(21) Anmeldenummer : 83113036.4

(22) Anmeldetag : 23.12.83

(51) Int. Cl.⁴ : **B 01 J 3/02, C 12 C 7/04**

(54) Verfahren und Vorrichtung zur Beschleunigung des Luftaustausches beim Füllen und Entleeren eines Druckraumes.

(30) Priorität : 31.03.83 CH 1803/83

(43) Veröffentlichungstag der Anmeldung :
10.10.84 Patentblatt 84/41

(45) Bekanntmachung des Hinweises auf die Patenterteilung : 17.08.88 Patentblatt 88/33

(84) Benannte Vertragsstaaten :
AT DE FR IT

(56) Entgegenhaltungen :
FR-A- 2 289 124
GB-A-  468 667
US-A- 3 606 586
US-A- 3 734 122

(73) Patentinhaber : BUCHER-GUYER AG Maschinenfabrik
CH-8166 Niederweningen/Zürich (CH)

(72) Erfinder : Schmid, Alfred
Rietlistrasse 381
CH-8165 Schöfflisdorf (CH)

Jouve, 18, rue St-Denis, 75001 Paris, France

## Beschreibung

Die Erfindung betrifft ein Verfahren zur Beschleunigung des Luft-bzw. Gasaustausches und zur Einsparung von Betriebsenergie beim Befüllen und Entleeren eines Druckraumes.

Bei einem derartigen Verfahren fallen einerseits beim Befüllen des Druckraumes in der Anfangsphase bis zum Erreichen eines geringen Druckes über dem Umgebungsdruck unwirtschaftliche Energiekosten an, weil die in einem Kompressor auf einen höheren Druck aufbereitete Luft oder ein Gas auf dem Transportweg in den leeren Druckraum wieder expandiert. Alternativ erfordert der Einsatz eines Gebläses zum gleichen Zweck weniger Energie, hingegen wird zum Erreichen eines minimalen Füllgrades bei erheblich geringerem Füllvermögen eine grössere Einsatzzeit benötigt, die sich nachteilig auf die Effizienz beim Befüllen des Druckraumes auswirkt.

Aehnlich verhält es sich beim Entleeren eines Druckraumes mit anschliessendem Aufbau eines Vakuums. Hier wird beim Oeffnen eines Ventils relativ schnell eine Entspannung der Druckspitze erreicht, währenddem die Entspannung des Druckes über dem Umgebungsdruck und der anschliessende Aufbau eines Vakuums sich nur mit relativ hohem Energieaufwand bzw. bei Verwendung eines Gebläses mit einer erheblichen Verlängerung der Prozesszeit bewerkstelligen lässt.

Ein solcher Druckraum kann sowohl der Speicherung komprimierter Luft und Gase dienen als auch beim Trennen von flüssigen und festen Stoffen verwendet werden.

So sind beispielsweise bei Einrichtungen zum Trennen von festen und flüssigen Stoffen mit einem drehbar gelagerten Pressbehälter, der durch eine flexible Membran in einen Druckraum und in einen Pressraum unterteilt ist und bei dem der Druckraum eine Einlassanordnung für das Druckmedium und der Pressraum eine Auslassanordnung für die auszupressende Flüssigkeit aufweist, bekannt, deren Druckraum bis zum Erreichen des Pressdruckes mit Druckluft aus einem Kompressor aufgefüllt wird.

Erfahrungsgemäss ist zum Auspressen der Maische bei einer solchen Einrichtung ein Drittel des in den Druckraum einzuführenden Luftvolumens dazu notwendig, die unter Vakuum an der Behälterwand anliegende Membran an die Maische anzulegen.

Das Aufbereiten von Luft mittels Kompressor, zum Zwecke des Anlegens der Membran an die Maische ist nicht effizient genug und es ist ebenso unbefriedigend, nach dem Abblasen des Druckraumes die Restluft mittels Gebläse abzusaugen.

Gleiches gilt beim Befüllen bzw. Entleeren eines Druckraumes zur Speicherung von Gasen oder Luft.

Auf Wunsch können diese Anlagen mit einem zusätzlichen Gebläse versehen werden, das die Aufgabe des Anlegens der Membran an die Maische übernimmt; diesbezüglich sind solche Anwendungen in der Praxis bekannt. Somit ist es möglich, den Vordruck und das Absaugen der Luft im Druckraum unter geringerem Energieaufwand als bisher zu erreichen. Als Nachteil bleibt die längere Betriebszeit, die sich aufgrund mehrerer Arbeistszyklen entsprechend erhöht.

Aufgabe der Erfindung ist es somit, für das Befüllen und Entleeren von Druckraüm ein Verfahren zur Beschleunigung des Luftaustausches und zur Einsparung von Betriebsenergie zu schaffen, um die wirtschaftlichen Konsequenzen verbessern zu können.

Erfindungsgemäss wird diese Aufgabe dadurch gelöst, dass das Befüllen des Druckraumes in eines ersten Stufe bzw. das Entleeren mittels einer mit dem Druckraum leitungsverbundenen, Strahlpumpe erfolgt.

Weitere Merkmale, Einzelheiten und Vorteile der Erfindung sind der Beschreibung und Zeichnung zu entnehmen. Es zeigen:

Fig. 1 eine schematische Darstellung der erfindungsgemässen Einrichtung und

Fig. 2 einen Längsschnitt durch die Strahlpumpenvorrichtung.

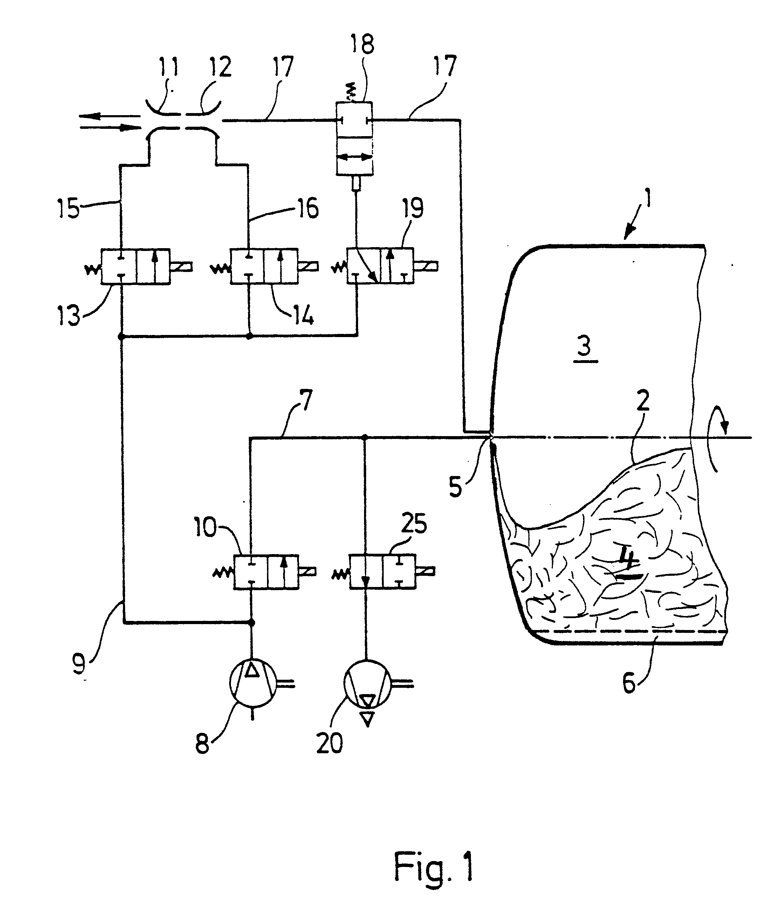

In Fig. 1 ist gemäss Pos.1 ein drehbar gelagerter Pressbehälter veranschaulicht, der durch eine flexible Membran 2 in einen Druckraum 3 und in einen Pressraum 4 unterteilt ist. Der Druckraum 3 ist mit einer Einlassanordnung 5 für das Druckmedium versehen und der Pressraum 4 weist eine Auslassanordnung 6 für die ausgepresste Flüssigkeit auf.

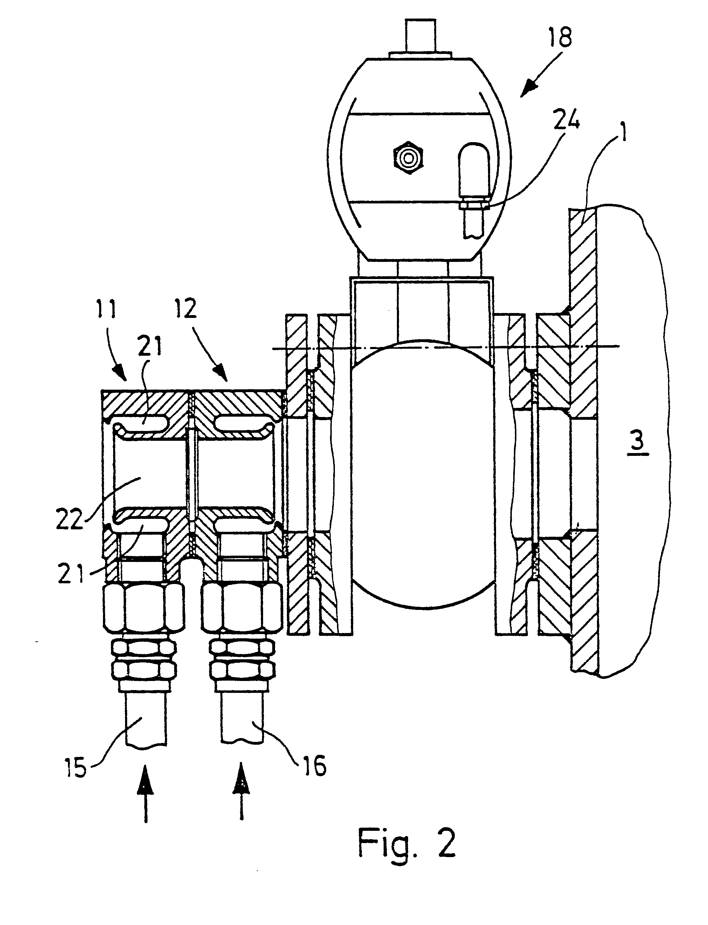

Der Druckraum 3 ist über eine Druckluft-Hauptleitung 7 mit einem Kompressor 8 verbunden. An der Druckluft-Hauptleitung 7 ist nach dem Kompressor 8 eine Druck-luft-Steuerleitung 9 angeschlossen und anschliessend folgt ein Absperrorgan 10. Der Zutritt des Druckmediums in den Druckraum 3 erfolgt über eine Dreheinführung, die nicht näher dargestellt ist.In der Druckluft-Steuerleitung 9, die in den Druckraum 3 mündet, sind zwei Strahlpumpen 11 und 12 angeordnet, von denen die eine 11 zum Befüllen und die andere 12 zum Entleeren des Druckraumes bestimmt ist. Zum wechselweisen Betrieb dieser Strahlpumpen 11,12 ist die Druckluftleitung 9 in jeweils jeder Strahlpumpe zugeordnete, parallele Leitungsabschnitte 15 und 16 aufgeteilt, die mit wechselweise zusammenwirkenden Absperrventilen 13 und 14 versehen sind. Die Strahlpumpen 11 und 12 sind derart zusammengebaut, dass ihre Auslassrohre kommunizieren. Zur Erzielung eines optimalen Wirkungsgrades ist die zum Befüllen des Druckraumes 3 bestimmte Strahlpumpe 11 dem Kompressor 8 in der Steuerleitung 9 näher angeordnet. Diese Strahlpumpe 11 saugt aufgrund ihrer Ausbildung, die noch im Zusammenhang mit Fig.2 näher zu erläutern sein wird, Luft aus der Umgebung an und erzeugt damit eine grössere Luftmenge, die zum Befüllen des Druckraumes bestimmt ist.

Die Strahlpumpe 12 ist zum Entleeren einer bestimmten Restluftmenge aus dem Druckraum 3 vorgesehen. Sie liegt näher beim Druckraum 3 als die zum Befüllen bestimmte Strahlpumpe 11.

Die Füll- bzw. Entleerungsleitung 17 weist ein Absperrelement 18 auf, welches bei betriebenen Strahlpumpen 11,12 offen gehalten wird. Die Betätigung dieses Absperrelementes 18 kann über die Druckluft-Steuerleitung mittels betätigbarem Wegeventil 19 erfolgen.

Zur Verbindung der Füll- bzw. Entleerungsleitung 17 mit dem Druckraum 3 wird die von der Druckluft-Hauptleitung 7 bestehende Dreheinführung verwendet. Zur weiteren Senkung der Betriebskosten ist bei der Erzeugung eines Vakuums im Druckraum 3 in der Füll- oder den Maischeauflockerungsphasen ein Gebläse 20 an die Druckluft-Hauptleitung 7 angeschlossen. Die Leitungsverbindung zwischen Druckluft-Hauptleitung 7 und Gebläse 20 kann im Bedarfsfalle, d.h. beim Füllen des Druckraumes 3 geschlossen werden.

In Fig. 2 ist die praxisnahe Ausbildung der Strahlpumpen 11,12 dargestellt, wie sie zusammen mit dem Absperrelement 18 am Pressbehälter 1 angeordnet sind. Die zum Befüllen des Druckraumes 3 verwendete Strahlpumpe 11 ist an den Leitungsabschnitt 15 der Druckluft-Steuerleitung 9 angeschlossen. Die Druckluft tritt in einen ringförmigen Verteiler 21 ein und strömt von dort über eine Ringdüse 22, in der sie umgelenkt wird, durch das Auslassrohr in Richtung Druckraum 3. Bei diesem Vorgang entsteht an der Ringdüse 22 eine Unterdruckzone, durch die Umgebungsluft angesaugt und durch das Auslassrohr in den Druckraum 3 transportiert wird.

Beim Entleeren des Druckraumes 3 wird die mit Leitungsabschnitt 16 der Druckluft-Steuerleitung 9 verbundene Strahlpumpe 12 mit Druckluft vom Kompressor 8 betrieben, während Strahlpumpe 11 regungslos ohne Druckluftzufuhr bleibt. Mittels Strahlpumpe 12 wird eine im Druckraum 3 nach dem Abblasen des Druckraumes 3 verbleibende Restluftmenge abgesaugt.

Wie eingangs erwähnt, wird nach Erreichen eines bestimmten Druckes im Druckraum 3 die Strahlpumpe 11 abgestellt und Absperrelement 18 geschlossen. Das Schliessen des Absperrelementes erfolgt selbsttätig mittels eines Kraftspeichers, z.B. einer Feder, während das Oeffnen mittels eines an der Druckluft-Steuerleitung 9 angeschlossenen Wegeventils 19 geschieht.

Die Strahlpumpen 11 und 12 sind einerseits mit dem an Flanschen am Pressbehälter 1 befestigten Absperrelement 18, z.B. Kugelhahn, und der Druckluft-Steuerleitung 9 dicht verbunden. Besondere Vorkehrungen zur Montage sind nicht getroffen. Pos. 24 weist auf den Anschluss der zur Betätigung des Kugelhahns erforderlichen Druckluft hin.

Funktionsweise bei einer Einrichtung zum Trennen von flüssigen und festen Stoffen mit einer eingangs beschriebenen Presse.

Ausgehend von der mit Maische gefüllten Presse beginnt nach erfolgter Vorentsaftung der Presszyklus, d.h. Absperrorgan 10 ist geschlossen, die Druckluft aus dem Kompressor 8 strömt durch die Druckluft-Steuerleitung 9 durch das offene Absperrventil 13 — Absperrventil 14 ist geschlossen — in die Strahlpumpe 11. Aus der Umgebung saugt letztere Luft an, die unter Mischwirkung mit der Kompressor-Luft in der Füll- bzw. Entleerungsleitung 17 das durch das betätigte Wegeventil 19 geöffnete Absperrelement 18 durchströmt und in den Druckraum 3 des Pressbehälters 1 dringt. Dabei löst sich die Membran 2 von der Behälterwand und legt sich an der Maische an.

Für diesen als erste Stufe bezeichneten Vorgang im Presszyklus werden ca. 33 % desjenigen Luftvolumens aufgebracht, das zum Pressen mit ca. 2 bar Druck benötigt wird.

An aufbereiteter Kompressor-Luft werden für dieses Vorfüllen des Druckraumes mittels Strahlpumpe ca. 20 % an das benötigte Vorfüllvolumen beigesteuert.

Hilfsweise könnte zur Unterstützung dieses Füllvorganges das Gebläse 20 in umgekehrter Richtung wirkend als vorgesehen — sei es durch Drehrichtungsänderung oder Aenderung der Leitungsführung — verwendet werden.

Bei Erreichen eines bestimmten Druckes im Druckraum wird auf ein Signal aus dem Druckraum das Absperrelement 18 und allenfalls Schieberventil 25 geschlossen, ebenso Absperrventil 13 und 14, welches bereits geschlossen ist. Die kromprimierte Kompressor-Luft strömt nun durch das inzwischen geöffnete Absperrorgan 10 in den Druckraum 3 und leitet durch einen Druckaufbau das Auspressen der Maische ein.

Nach einer bestimmten Verweilzeit der Membran unter Pressdruck, wird der Druckraum durch Abblasen der komprimierten Luft wieder entspannt. Die Luft strömt durch Oeffnen des Schieberventils 25 durch das Gebläse 20 ab.

Zur Verkürzung der Abblaszeit könnte auch Absperrelement 18 geöffnet werden, sodass die Luft aus dem Druckraum 3 durch die Strahlpumpe 11 an die Umgebung abströmen kann.

Vor Eintreten von Umgebungsdruck im Druckraum oder bei ca. 0,2 bar Ueberdruck, schliesst Absperrorgan 10 und Absperrventil 13, wogegen Absperrventil 14 und Absperrelement 18 — letzteres mit Hilfe des Wegeventils 19 — öffnen. Die Druckluft aus dem Kompressor erreicht nun Strahlpumpe 12, welche die Restluftmenge aus dem Druckraum 3 saugt und sie an die Umgebung abgibt. Zu diesem Zwecke wird auch das Gebläse 20 eingesetzt und nach Erreichen eines bestimmten Unterdruckes im Druckraum 3 wird Strahlpumpe 12 abgeschaltet und Absperrventil 14 sowie Absperrelement 18 geschlossen.

Anschliessend leitet ein bestimmter Unterdruckswert die Auflockerungsphase ein, während welcher der Pressbehälter in Drehung versetzt wird.

Diese Arbeitszyklen wiederholen sich sodann mehrmals nach einer programmierten Prozesssteuerung.

**Patentansprüche**

1. Verfahren zur Beschleunigung des Luft- oder Gasaustausches und zur Einsparung von Betriebsenergie beim Befüllen und Entleeren eines Druckraumes, dadurch gekennzeichnet, dass das Befüllen in einer ersten Stufe mit einer druckluftbetriebenen Strahlpumpe (11) und danach mit direkter Druckluftzufuhr erfolgt, und dass der Druckraum mittels druckluftbetriebener Strahlpumpe (12) entleert wird.

2. Verfahren nach Anspruch 1 mit einer Einrichtung zum Trennen von flüssigen und festen Stoffen mit einem drehbar gelagerten Pressbehälter, der durch eine flexible Membran in einen Druckraum und in einen Pressraum unterteilt ist, wobei der Druckraum eine Einlassanordnung für das Druckmedium und der Pressraum eine Auslassanordnung für die auszupressende Flüssigkeit aufweist, mit welcher Einrichtung zum Auspressen der Maische mindestens ein Presszyklus und ein Auflockerungszyklus vorgesehen ist, dadurch gekennzeichnet, dass die Strahlpumpe (11) in der Anfangsphase eines Presszyklusses, in welcher die Membran an die Maische angelegt wird, und/oder beim Zurückziehen der Membran vor Eintreten des Umgebungsdruckes im Druckraum eingeschaltet wird.

3. Verfahren nach einem der Ansprüche 1 und 2, dadurch gekennzeichnet, dass die Strahlpumpe bei Erreichen eines bestimmten Druckes im Druckraum abgeschaltet und die zum Auspressen der Maische bestimmte komprimierte Luft dem Druckraum zugeführt wird.

4. Verfahren nach einem der Ansprüche 1 und 2, dadurch gekennzeichnet, dass beim Entleeren des Druckraumes (3) mindestens eine Teilmenge der komprimierten Luft selbsttätig über die Strahlpumpen (11, 12) abgeführt wird.

5. Verfahren nach einem der Ansprüche 1 und 2, dadurch gekennzeichnet, dass dieses mittels Programm-Steuerung erfolgt.

6. Einrichtung zur Durchführung des Verfahrens nach einem der Ansprüche 1 und 2, dadurch gekennzeichnet, dass an die einen Kompressor (8) mit dem Druckraum (3) verbindende Druckluft-Hauptleitung (7) eine Druck-luft-Steuerleitung (9) angeschlossen ist, an deren Leitungsende zum Befüllen oder Entleeren des Druckraumes (3) Strahlpumpen (11, 12) angeordnet sind, an die eine den Druckraum (3) verbindende Füll- bzw. Entleerungsleitung (17) anschliesst.

7. Einrichtung nach Anspruch 6, dadurch gekennzeichnet, dass die Druckluft-Hauptleitung (7) nach dem Anschluss der Druckluft-Steuerleitung (9) ein betätigbares Absperrorgan (10) aufweist.

8. Einrichtung nach einem der Ansprüche 6 und 7, dadurch gekennzeichnet, dass das Ende der Druckluft-Steuerleitung (9) in jeweils einer Strahlpumpe (11, 12) zugeordnete, parallele Leitungsabschnitte (15, 16) aufgeteilt ist, von denen jeder ein auf die entgegengesetzt wirkenden Strahlpumpen (11, 12) wechselweise einwirkendes Absperrventil (13, 14) aufweist.

9. Einrichtung nach Anspruch 8 und 9, dadurch gekennzeichnet, dass die Strahlpumpen (11,12) mit ihren stromabwärts sich befindenden Enden dicht verbunden sind.

10. Einrichtung nach Anspruch 6, dadurch gekennzeichnet, dass die die Strahlpumpen (11, 12) mit dem Druckraum (3) verbindende Füll- bzw. Entleerungsleitung (17) ein betätigbares Absperrelement (18) aufweist.

11. Einrichtung nach einem der Ansprüche 6 und 10, dadurch gekennzeichnet, dass das Absperrelement (18) mittels eines in der Druckluft-Steuerleitung (9) angeordneten Wegeventils (19) steuerbar ist.

12. Einrichtung nach einem der Ansprüche 10 und 11, dadurch gekennzeichnet, dass das Absperrelement (18) in Abhängigkeit zu den Absperrventilen (13, 14) gesteuert ist.

## Claims

1. A method of accelerating the exchange of air or gas and of saving operating energy during the filling and emptying of a pressure compartment, characterised in that, in a first stage, the filling is effected by a jet pump (11) driven by compressed air and then by the direct supply of compressed air and that the pressure compartment is emptied by means of a jet pump (12) driven by compressed air.

2. A method according to Claim 1 with a device for separating liquid and solid substances having a rotatably mounted pressing vessel which is divided, by a flexible diaphragm, into a pressure compartment and into a pressing compartment, wherein the pressure compartment comprises an inlet arrangement for the pressure medium and the pressing compartment comprises an outlet arrangement for the liquid to be squeezed out, with which device for pressing the mash at least one pressing cycle and one loosening-up cycle are provided, characterised in that the jet pump (11) is switched on in the initial phase of a pressing cycle in which the diaphragm is applied to the mash and/or during the withdrawal of the diaphragm before the ambient pressure enters the pressure compartment.

3. A method according to one of the Claims 1 or 2, characterised in that the jet pump is switched off when a certain pressure is reached in the pressure compartment and the compressed air intended for pressing the mash is supplied to the pressure compartment.

4. A method according to one of the Claims 1 or 2, characterised in that, during the emptying of the pressure compartment (3), at least some of the compressed air is drawn off automatically via the jet pumps (11, 12).

5. A method according to one of the Claims 1 or 2, characterised in that this is carried out by means of program control.

6. A device for carrying out the method according to one of the Claims 1 or 2, characterised in that connected to the main compressed-air line (7) connecting a compressor (8) to the pressure compartment (3) is a compressed-air control line (9) at the end of which there are disposed jet pumps (11, 12) for filling or emptying the pressure compartment (3), which pumps are followed by a filling and emptying line (17) connected to the pressure compartment (3).

7. A device according to Claim 6, characterised in that the main compressed-air line (7) comprises, after the connection of the compressed-air control line (9), a shut-off member (10) which can be actuated.

8. A device according to one of the Claims 6 or 7, characterised in that the end of the compressed-air control line (9) is divided into parallel portions (15, 16) of line, each of which is associated with a jet pump (11, 12) and each of which comprises a shut-off valve (13, 14) acting alternately on the oppositely acting jet pumps (11, 12).

9. A device according to Claims 8 and 9, characterised in that the jet pumps (11, 12) are connected in a leakproof manner by their downstream ends.

10. A device according to Claim 6, characterised in that the filling and emptying line (17) connecting the jet pumps (11, 12) to the pressure compartment (3) comprises a shut-off element (18) which can be actuated.

11. A device according to one of the Claims 6 or 10, characterised in that the shut-off element (18) can be controlled by means of a directional control valve (19) disposed in the compressed-air control line (9).

12. A device according to one of the Claims 10 or 11, characterised in that the shut-off element (18) is controlled depending on the shut-off valves (13, 14).

**Revendications**

1. Procédé pour accélérer l'échange de l'air ou d'un gaz et pour économiser l'énergie d'exploitation lors de l'emplissage et du vidage d'une enceinte sous pression, caractérisé par le fait que l'emplissage a lieu, dans une première phase, à l'aide d'une pompe à jet (11) actionnée par de l'air comprimé, puis ensuite par délivrance directe d'air comprimé ; et par le fait que l'enceinte sous pression est vidée au moyen d'une pompe à jet (12) actionnée par de l'air comprimé.

2. Procédé selon la revendication 1, associé à un appareil destiné à séparer des substances liquides et solides, muni d'une cuve de compression montée rotative qui est subdivisée, par une membrane flexible, en une chambre de pression et en une chambre de compression, la chambre de pression présentant un dispositif d'admission du fluide sous pression et la chambre de compression possédant un dispositif de sortie du liquide devant être exprimé, appareil dans lequel au moins un cycle de compression et un cycle de dispersion sont prévus en vue de l'expulsion du magma de trempage, caractérisé par le fait que la pompe à jet (11) est mise en action pendant la phase initiale d'un cycle de compression au cours de laquelle la membrane est plaquée contre le magma de trempage, et/ou lors de la rétraction de cette membrane, avant pénétration de la pression atmosphérique dans la chambre de pression.

3. Procédé selon l'une des revendications 1 et 2, caractérisé par le fait que la pompe à jet est mise à l'arrêt lorsqu'une pression déterminée est atteinte dans la chambre de pression, et l'air comprimé destiné à expulser la magma de trempage est délivré à la chambre de pression.

4. Procédé selon l'une des revendications 1 et 2, caractérisé par le fait que, lors du vidage de la chambre de pression (3), au moins une quantité partielle de l'air comprimé est évacuée automatiquement par l'intermédiaire des pompes à jet (11, 12).

5. Procédé selon l'une des revendications 1 et 2, caractérisé par le fait qu'il se déroule au moyen d'une commande programmée.

6. Appareil pour la mise en oeuvre du procédé selon l'une des revendications 1 et 2, caractérisé par le fait qu'un conduit (9) de commande de l'air comprimé est raccordé au conduit principal (7) à air comprimé reliant un compresseur (8) à la chambre de pression (3), conduit de commande à l'extrémité duquel, en vue de l'emplissage ou du vidage de la chambre de pression (3), se trouvent des pompes à jet (11, 12) auxquelles se raccorde un conduit (17) d'emplissage ou de vidage assurant la liaison de la chambre de pression (3).

7. Appareil selon la revendication 6, caractérisé par le fait que le conduit principal (7) à air comprimé présente un organe d'isolement commandable (10), après le raccordement du conduit (9) de commande de l'air comprimé.

8. Appareil selon l'une des revendications 6 et 7, caractérisé par le fait que l'extrémité du conduit (9) de commande de l'air comprimé est scindée en des tronçons de conduit parallèles (15, 16) qui sont respectivement associés à une pompe à jet (11, 12), et dont chacun présente une valve d'isolement (13, 14) qui agit alternativement sur les pompes à jet (11, 12) opérant dans des sens opposés.

9. Appareil selon les revendications 8 et 9, caractérisé par le fait que les pompes à jet (11, 12) sont reliées, de manière étanche, par leurs extrémités situées en aval.

10. Appareil selon la revendication 6, caractérisé par le fait que le conduit (17) d'emplissage ou de vidage, reliant les pompes à jet (11, 12) à la chambre de pression (3), présente un élément d'isolement commandable (18).

11. Appareil selon l'une des revendications 6 et 10, caractérisé par le fait que l'élément d'isolement (18) peut être commandé au moyen d'un distributeur (19) installé sur le conduit (9) de commande de l'air comprimé.

12. Appareil selon l'une des revendications 10 et 11, caractérisé par le fait que l'élément d'isolement (18) est commandé en fonction des valves d'isolement (13, 14).

Fig. 1

Fig. 2